Europäisches Patentamt

European Patent Office

Office européen des brevets

(11) Veröffentlichungsnummer: **0 045 886**
**B1**

# (12) EUROPÄISCHE PATENTSCHRIFT

(45) Veröffentlichungstag der Patentschrift:
**25.05.83**

(21) Anmeldenummer: **81105860.1**

(22) Anmeldetag: **24.07.81**

(51) Int. Cl.³: **B 23 D 79/06**, B 23 Q 1/26

(54) Motorisch angetriebener Schaber.

(30) Priorität: **01.08.80 DE 3029193**

(43) Veröffentlichungstag der Anmeldung:
**17.02.82 Patentblatt 82/7**

(45) Bekanntmachung des Hinweises auf die Patenterteilung:
**25.05.83 Patentblatt 83/21**

(84) Benannte Vertragsstaaten:
**AT BE CH DE FR GB IT LI LU NL SE**

(56) Entgegenhaltungen:
**CH-A-195 541**
**DE-B-1 211 899**
**US-A-3 145 449**
**US-A-3 147 549**
**US-A-3 285 136**
**US-A-3 535 983**

(73) Patentinhaber: **Schmid & Wezel, Postfach 60,
D-7133 Maulbronn (DE)**

(72) Erfinder: **Wetzel, Ludwig, Wolfsbergallee 62,
D-7530 Pforzheim (DE)**

(74) Vertreter: **Dreiss, Uwe, Dr. jur. Dipl.-Ing. M.Sc. et al,
Patentanwälte Dreiss, Hosenthien & Fuhlendorf
Gerokstrasse 6, D-7000 Stuttgart 1 (DE)**

## Motorisch angetriebener Schaber

Die Erfindung betrifft einen motorisch angetriebenen Schaber gemäß dem ersten Teil des Anspruchs 1.

Ein derartiger Schaber ist bekannt, aber nicht druckschriftlich belegt.

Bei diesem bekannten Schaber sind die Gegenführungen durch konische Leisten gebildet, die zur Spieleinstellung an zugeordneten schrägen Flächen eines vorspringenden Gehäuseteils verstellbar angeordnet sind. Die Herstellung der schrägen Flächen und der keilförmigen Führungsleisten ist aufwendig und die Nachstellung zum Spielausgleich bei auftretendem Verschleiß ist relativ umständlich und zeitaufwendig.

In Vermeidung dieser Nachteile liegt der vorliegenden Erfindung die Aufgabe zugrunde, einen Schaber der eingangs genannten Art so zu verbessern, daß bei einfacher Herstellung der Teile eine besonders rasche und genaue Spieleinstellung ermöglicht ist.

Diese Aufgabe wird durch die kennzeichnenden Merkmale des Anspruchs 1 gelöst. Damit können die die Gegenführung bildenden Führungsplatten eben ausgebildet sein und sie müssen nicht verstellbar am vorspringenden Gehäuseteil befestigt werden. Die Spieleinstellung kann durch Verdrehen der Stellschraube bzw. der Stellschrauben direkt und damit feinfühlig eingestellt werden, ohne daß hierzu irgendwelche Teile gelöst, verschoben und wieder festgespannt werden müssen.

Zweckmäßigerweise sind symmetrisch seitlich am Werkzeugaufnahmekopf jeweils eine biegeweiche Zunge durch eine seitliche Nut gebildet, wobei durch die Tiefe der Nut und die Dicke der Zunge die Anpaßbarkeit und der mögliche Verstellbereich beeinflußbar ist. Besonders vorteilhaft können die Stellschraube bzw. Stellschrauben im eine Seite der Nut bildenden Teil des Schabewerkzeugaufnahmekopfs angeordnet sein, wobei zur Einsparung von Kontermuttern zweckmäßigerweise selbsthemmende Schrauben Verwendung finden können.

Ein leichtes Gewicht des Schabewerkzeugaufnahmekopfes kann dadurch erzielt werden, daß er einen U-Querschnitt aufweist und die beiden Nuten und die Führungsflächen im Basisteil vorgesehen sind, wobei ferner die Stellschrauben die beiden Schenkel in Schenkelrichtung durchdringen und weiter die Innenflächen der beiden Schenkel und der Basis als Aufnahme und Anlageflächen für das Schabewerkzeug dienen können.

Weitere erfindungsgemäße Ausbildungen sind den Unteransprüchen zu entnehmen und werden mit ihren Vorteilen in der nachstehenden Beschreibung näher erläutert. In den Zeichnungen zeigt:

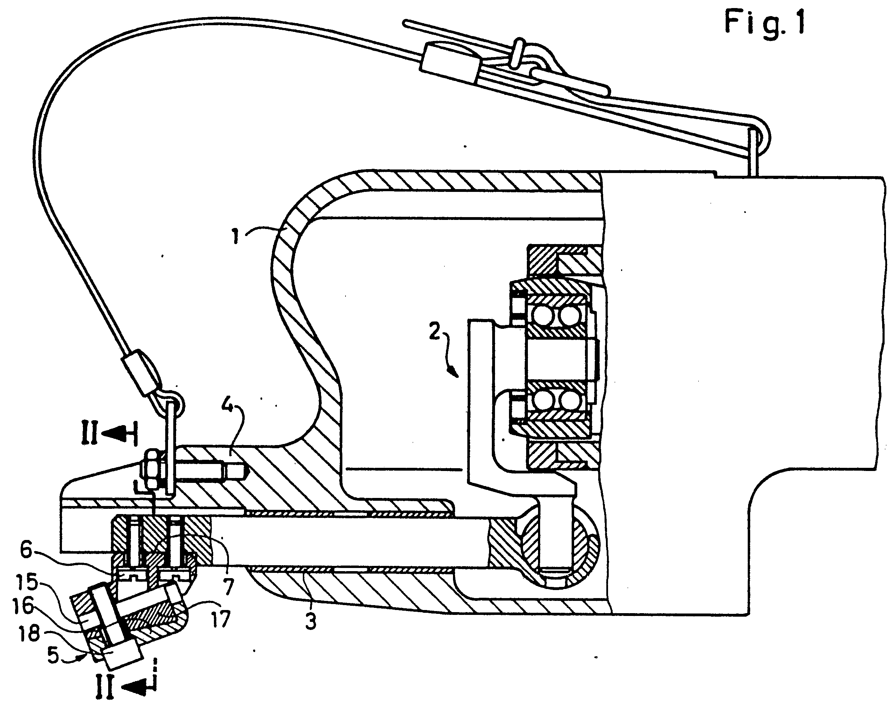

Fig. 1 einen Teilschnitt durch den Kopfbereich eines Schabers und

Fig. 2 einen Schnitt gemäß der Linie II-II in Fig. 1 durch den Schabewerkzeugaufnahmekopf und dessen Führung.

In einem Gehäuse 1 eines nur teilweise dargestellten Schabers ist eine über einen Taumelantrieb 2 in axialer Richtung verschiebbar geführte Hubstange 3 vorgesehen, an deren freiem aus einem vorspringenden Gehäuseteil 4 herausragenden Ende ein Schabewerkzeugaufnahmekopf 5 über zwei Schrauben 6 austauschbar gehalten ist. Die Hubstange 3 hat einen Kreisquerschnitt und trägt zur Befestigung des Schaberwerkzeugaufnahmekopfes 5 eine Abflachung 7, an der eine Flachseite 8 des Schabewerkzeugaufnahmekopfes 5 anliegt. Die Flachseite 8 ist als ebene Fläche ausgebildet und bildet seitlich zwei parallele Führungsflächen 9, die mit zwei Gegenführungen 10 zusammenwirken, die durch ebene, mit dem vorspringenden Gehäuseteil 4 verbundene Führungsplatten 11 gebildet sind.

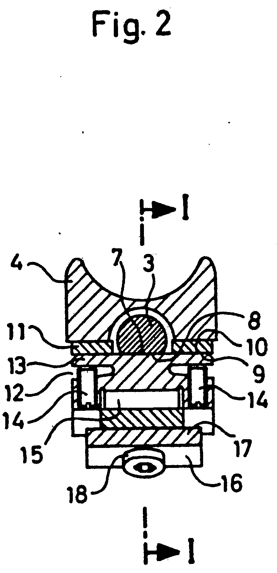

Der Schabewerkzeugaufnahmekopf 5 hat, wie aus Fig. 2 ersichtlich ist, einen U-Querschnitt, wobei die Basis die Flachseite 8 bildet. Durch seitliche Nuten 12 wird im Bereich der Führungsplatten 11 jeweils eine biegeweiche Zunge 13 gebildet, die über jeweils mindestens eine im Schenkel des U-Querschnitts des Schabewerkzeugaufnahmekopfes 5 angeordnete Stellschraube 14 zur Spieleinstellung in Richtung gegen die zugeordnete Führungsplatte 11 hin biegbar ist. Die Stellschrauben 14 selbst sind selbsthemmende Schrauben, so daß keine besondere Sicherung durch eine Kontermutter od. dgl. erforderlich ist, so daß das Laufspiel zwischen den Führungsflächen 9 und den Gegenführungen 10 rasch und bequem einstell- und korrigierbar ist.

Das Innere des U-Querschnitts des Schabewerkzeugaufnahmekopfs 5 bildet eine Aufnahme 15 für das eigentliche nicht dargestellte Schabewerkzeug, das über einen Bügel 16 und eine Keilplatte 17 mittels einer Schraube 18 einspannbar ist.

## Patentansprüche

1. Motorisch angetriebener Schaber mit einer axial verschiebbar geführten Hubstange (3), an deren freiem Ende ein Schabewerkzeugaufnahmekopf (5) vorgesehen ist, der eine Flachseite (8) mit zwei Führungsflächen (9) aufweist, die mit jeweils einer Gegenführung (10) zusammenwirken, wobei zur Spieleinstellung die Führungsflächen (9) und die Gegenführungen (10) relativ gegeneinander verstellbar sind, dadurch gekennzeichnet, daß mindestens eine der beiden Führungsflächen (9) durch eine biegeweiche Zunge (13) gebildet ist, die über mindestens eine Stellschraube (14) gegen die zugeordnete Gegenführung (10) hin biegbar ist.

2. Schaber nach Anspruch 1, dadurch gekennzeichnet, daß symmetrisch seitlich am Schabewerkzeugaufnahmekopf (5) jeweils eine biegeweiche Zunge (13) durch eine seitliche Nut (12) gebildet ist.

3. Schaber nach Anspruch 1 oder 2, dadurch gekennzeichnet, daß die Stellschraube (14) bzw. die Stellschrauben (14) im eine Seite der Nut (12) bildenden Teil des Schabewerkzeugaufnahmekopfes (5) angeordnet sind.

4. Schaber nach einem der Ansprüche 1 bis 3, dadurch gekennzeichnet, daß die Stellschraube (14) eine selbsthemmende Schraube ist.

5. Schaber nach einem der Ansprüche 1 bis 3, dadurch gekennzeichnet, daß der Schabewerkzeugaufnahmekopf (5) einen U-Querschnitt aufweist und daß die beiden Nuten (12) und die Führungsflächen (9) an der Basis des U-Querschnitts vorgesehen sind, daß ferner die Spannschrauben (14) die beiden Schenkel des U-Querschnitts in Schenkelrichtung durchdringen und weiter die Innenflächen der beiden Schenkel und der Basis als Aufnahme (15) und Anlageflächen für das Schabewerkzeug dienen.

6. Schaber nach Anspruch 1, dadurch gekennzeichnet, daß die Gegenführungen (10) durch zwei ebene, austauschbar angeordnete Führungsplatten (11) gebildet sind, die parallel neben der Hubstange (3) an einem vorspringenden Gehäuseteil (4) befestigt sind.

## Claims

1. Power driven scraper with a stroking rod (3), which is guided axially displaceably, at the free end of which a scraping tool receiving head (5) is positioned, which is provided with a flat side (8) with two guide surfaces (9), which cooperate each with a counter guidance means (10), whereby for adjusting the clearance the guide surfaces (9) and the counter guidance means (10) are adjustable relatively to each other, characterized in that at least one of the both guide surfaces (9) is provided by a tongue (13), which is resilient in such a manner that it can be bent, and further which is bendable by at least one positioning screw (14) against the corresponding counter guidance means (10).

2. Scraper in accordance to claim 1, characterized in that symmetrically on both sides each of the scraping tool receiving head (5) one resilient tongue (13) is formed by a sideways arranged groove (12).

3. Scraper in accordance to claim 1 oder 2, characterized in that the positioning screw (14) or the positioning screws (14) respectively are provided in a member of the scraping tool receiving head (5) forming one side of the groove (12).

4. Scraper in accordance to one of claims 1 to 3, characterized in that the positioning screw (14) is a self-locking screw.

5. Scraper in accordance to one of claims 1 to 3, characterized in that the scraping tool receiving head (5) has a U-crossection and that the both grooves (12) and the guide surfaces (9) are provided on the base of the U-crossection, that further the fastening screws (14) penetrate the both legs of the U-crossection in the direction of the legs and that further the interior surfaces of the legs and of the base serve as a receiving means (15) and abutment surfaces for the scraping tool.

6. Scraper in accordance to claim 1, characterized in that the counter guidance means (10) are provided by two flat exchangeably arranged guidance plates (11), which are connected at a protruding housing portion (4) in parallel to the stroking rod (3).

## Revendications

1. Grattoir à moteur avec une tige de poussée qui est guidée de façon à pouvoir être déplacée axialement, à l'extrémité libre de laquelle est prévue une tête de réception d'un outil de grattage, qui présente un côté plat avec deux surface de guidage, qui agissent chacune avec un contreguidage, et pour le réglage du jeu, les surfaces de guidage et les contre-guidages peuvent être déplacés les uns par rapport aux autres, caractérisé en ce qu'au moins l'une des deux surfaces de guidage (9) est formée d'une langue flexible (13) qui peut être fléchie, au moyen d'au moins une vis de réglage (14) contre le contre-guidage (10) adjacent.

2. Grattoir selon la revendication 1 caractérisé en ce que symétriquement et de chaque côté de la tête de réception de l'outil de grattage (5) est formée une langue flexible (13) par une rainure latérale (12).

3. Grattoir selon l'une quelconque des revendications 1 ou 2 caractérisé en ce que la vis de réglage (14) et respectivement les vis de réglage (14) sont disposées dans un côte de la partie formant la rainure (12) de la tête (5) de réception de l'outil de grattage.

4. Grattoir selon l'une quelconque des revendications précédentes caractérisé en ce que la vis de réglage (14) est une vis à blocage automatique.

5. Grattoir selon l'une quelconque des revendications 1 à 3 caractérisé en ce que la tête de réception de l'outil de grattage (5) présente une coupe transversale en U et en ce que les deux rainures (12) et les surfaces de guidage (9) sont prévues sur la base de la coupe transversale en U, et en ce qu'en plus les vis de tension (14) traversent les deux branches de la coupe transversale en U dans la direction des branches, et de plus les surfaces internes des deux branches et la base servent de surface de réception (15) et de surface d'appui pour l'outil de grattage.

6. Grattoir selon la revendication 1 caractérisé en ce que les contre-guidage (10) sont formés de plaques de guidage (11) échangeables et planes, qui sont fixées parallèlement à proximité de la tige de poussée (3), sur une partie en protubérance (4) du boîtier.

Fig.1

# Fig. 2